# EUROPÄISCHE PATENTANMELDUNG

(11) **EP 2 028 096 A1**
(43) Veröffentlichungstag der Anmeldung: **25.02.2009**
(21) Anmeldenummer: 07114883.7
(22) Anmeldetag: 23.08.2007
(51) Int. Cl.: B62M 11/16, B62M 11/18

(54) **Mehrgängige epizyklische Getriebenabe**

(71) Anmelder: Elsasser, Urs, 8610 Uster (CH)
(72) Erfinder: Elsasser, Urs, 8610 Uster (CH)

(57) **Zusammenfassung**

Eine mehrgängige epizyklische Getriebenabe für ein Fahrrad, enthält zwei in Serie gekoppelte Getriebemodule (5, 6), wobei ein erstes Getriebemodul (5) über einen Antreiber (2) antreibbar ist und wobei über ein zweites Getriebemodul (6) ein Ausgangstreiber (3) antreibbar ist. Das erste Hohlrad (13) des ersten Getriebemoduls (5) ist mittels Kupplungsmitteln (24, 25) wahlweise mit dem Hohlrad (22) oder mit dem Planetenträger (21) des zweiten Getriebemoduls (6) verbindbar und wahlweise das Hohlrad (22) oder der Planetenträger (21) des zweiten Getriebemoduls (6) mittels Kupplungsmitteln (26, 27) mit dem Ausgangstreiber (3) verbindbar.

## Beschreibung

Die Erfindung betrifft eine mehrgängige epizyklische Getriebenabe für ein Fahrrad gemäss dem Oberbegriff von Anspruch 1. Weiterhin betrifft die Erfindung ein Speichenrad sowie ein Fahrrad.

Mehrgängige epizyklische Getriebenaben für Fahrräder dienen wie Kettenschaltungen dazu, mehrere Gangstufen bzw. Übersetzungen zur Verfügung zu stellen. Mit Kettenschaltungen werden dem Verwendungszweck im Gelände oder auf der Strasse entsprechend entweder grosse Gesamtübersetzungen bis 600 % oder sehr feine Gangstufen von weniger als 10 % erreicht. Herkömmliche mehrgängige epizyklische Getriebenaben weisen gegenüber Kettenschaltungen mehrheitllich eine deutlich kleinere Gesamtübersetzung oder grössere Gangstufen auf und bieten daher dem Anwender nicht in jedem Fall die optimale Anpassung an gegebene Verhältnisse. Zudem zeichnen sich insbesondere Getriebenaben mit mehr als sieben Gängen im Allgemeinen durch eine beträchtliche konstruktive Komplexität aus und weisen zum Teil Durchmesser auf, deren übermässige Grösse die Verbindung mittels Speichen zwischen Nabe und Radfelge erschwert.

Aus der DE 197 20 794 A1 ist beispielsweise eine mehrgängige epizyklische Getriebenabe mit drei in Serie gekoppelten Getriebemodulen bekannt geworden. Die Getriebenabe verfügt über zwei Planetengetriebe, die über einen gemeinsamen Planetenträger gekoppelt sind, ein drittes Planetengetriebe ist als Reduziergetriebe zur Verdoppelung der Gangzahl zuschaltbar. Mit dieser Anordnung können 14 Gangstufen erzielt werden. Die Verwendung dreier Getriebemodule führt dazu, dass eine entsprechend grosse Zahl Teile an der Übertragung des Drehmomentes beteiligt ist.

Die EP 1 289 827 B1 beschreibt Bauform einer Getriebenabe mit zwei oder mehr Planetengetrieben, die über automatische oder steuerbare Kupplungen auf vielfältige Weise miteinander gekoppelt werden, um eine Vielzahl von Gangstufen zu erreichen. Dieses Dokument beschreibt insbesondere eine Getriebenabe mit drei Planetengetrieben mit insgesamt acht verschiedenen schaltbaren Übersetzungen. Mit Gangsprüngen zwischen 13% und 28% bei einer Gesamtübersetzung von knapp über 300% entspricht die Getriebenabe nicht dem von Kettenschaltungen erreichten Standard.

Es ist daher eine Aufgabe der Erfindung, die Nachteile des Bekannten zu vermeiden, insbesondere eine mehrgängige epizyklische Getriebenabe der eingangs genannten Art zu schaffen, mit der unter Verwendung weniger Planetengetriebe, insbesondere unter Verwendung nur von zwei Planetengetrieben eine grössere Zahl nutzbarer Gangstufen erreicht werden kann. Die Getriebenabe soll sich durch eine geringe Zahl von an der Übertragung des Drehmomentes vom Antreiber zum Ausgangstreiber beteiligten Teilen auszeichnen. Sodann soll mit der Getriebenabe eine grosse Gesamtübersetzung und zugleich feine, möglichst gleichmässige Gangstufen erreichbar sein. Diese Aufgaben werden erfindungsgemäss mit einer Getriebenabe gelöst, die die Merkmale in Anspruch 1 aufweisen.

Die erfindungsgemässe mehrgängige epizyklische Getriebenabe enthält zwei in Serie gekoppelte Getriebemodule bestehend aus einem ersten und einem zweiten Getriebemodul. Dabei ist das erste Getriebemodul über ein Antreiber antreibbar und über das zweite Getriebemodul ist ein Ausgangstreiber antreibbar. Dabei können das erste und das zweite Getriebemodul um eine gemeinsame Nabenachse angeordnet sein, die drehfest mit einem Fahrradrahmen verbindbar ist. Der Antreiber kann drehbar auf der Nabenachse gelagert sein. Der Ausgangstreiber kann ebenfalls auf der Nabenachse drehbar gelagert sein, wobei der Ausgangstreiber mit einer drehbar um die Nabenachse gelagerte Nabenhülse mittels bekannten Verbindungsmitteln verbunden ist. Selbstverständlich könnte der Ausgangstreiber aber auch einstückig mit der Nabenhülse verbunden sein. Grundsätzlich könnten die beiden Getriebemodule auch in zwei Gehäusen räumlich getrennt montiert werden, indem zum Beispiel ein Getriebemodul in Nähe des Tretlagers angebracht wird. Neben dem bevorzugten Anwendungsgebiet der Getriebenabe für Fahrräder eignet sich diese weiter für Motorräder oder sogar auch für andere Fahrzeuge.

Das erste Getriebemodul weist wenigstens ein erstes, vorzugsweise ein erstes und ein zweites Sonnenrad, wenigstens ein wenigstes zweistufiges, auf einem Planetenträger sitzendes Planetenrad und ein erstes und ein zweites Hohlrad auf. Dabei ist der Antreiber wenigstens mit dem zweiten Hohlrad verbunden oder mittels Kupplungsmitteln verbindbar. Dabei gibt das erste Hohlrad den Abtrieb des ersten Getriebemoduls vor. Das daran anschliessende, zweite Getriebemodul weist wenigstens ein, vorzugsweise ein erstes und ein zweites Sonnenrad, wenigstens ein auf einem Planetenträger sitzendes Planetenrad, das vorzugsweise wenigstes zweistufig ausgestaltet ist, und wenigstens ein Hohlrad auf. Dabei ist das erste Hohlrad des ersten Getriebemoduls mittels Kupplungsmitteln wahlweise mit dem Hohlrad oder mit dem Planetenträger des zweiten Getriebemoduls verbindbar. Weiter ist wahlweise das Hohlrad oder der Planetenträger des zweiten Getriebemoduls mittels Kupplungsmitteln mit dem Ausgangstreiber verbindbar. Somit weist also jedes der beiden Getriebemodule separate Planetenträger auf. Durch die Verwendung lediglich zweier Getriebemodule ergibt sich eine verhältnismässig kleine, kompakte Baugrösse für die Mehrgangnabe, die sich weiterhin dadurch auszeichnet, dass mit ihr eine Vielzahl nutzbarer Gangstufen erreicht werden können. Weiterhin ist es denkbar, zu den zwei Getriebemodulen zusätzlich zur weiteren Vergrösserung der Gangzahl ein drittes Getriebemodul in die Getriebenabe zu integrieren. Grundsätzlich könnten erstes und zweites Getriebemodul auch vertauscht sein, indem der Antreiber wahlweise mit dem Hohlrad oder dem Planetenträger des zweiten Getriebemoduls verbindbar ist, während der Ausgangstreiber vom zweiten Hohlrad des ersten Moduls angetrieben wird.

Jedem Sonnenrad des ersten und des zweiten Getriebemoduls kann jeweils eine steuerbare Kupplung für die Verbindung zur Nabenachse zugeordnet sein, wobei die steuerbaren Kupplungen derart mittels Steuermitteln ansteuerbar sind, dass die Drehung jedes Sonnenrads in wenigstens eine Drehrichtung verhindert werden kann.

In einer ersten Ausführungsform kann die Getriebenabe für die Verbindung zwischen dem ersten Hohlrad des ersten Getriebemoduls und dem Hohlrad des zweiten Getriebemoduls eine automatische Kupplung aufweisen und/oder sie kann für die Verbindung zwischen dem ersten Hohlrad des ersten Getriebemoduls und dem Planetenträger des zweiten Getriebemoduls eine steuerbare Kupplung aufweisen. Als "automatische Kupplungen" im Sinne der Erfindung werden nachfolgend ungesteuerte automatisch wirkende Kupplungen bezeichnet, die eine treibende Verbindung in nur einer Richtung gewährleisten. Derartige automatische Kupplungen sind dem Fachmann bekannt und gebräuchlich. Vorteilhaft ist es, wenn alle Kupplungen einen grossen Durchmesser aufweisen bzw. wenn die von den Kupplungen zu übertragenden Kräfte auf einem grösstmöglichen Radius angreifen.

Vorteilhaft kann es sein, wenn die Getriebenabe für die Verbindung zwischen dem Ausgangstreiber und dem Hohlrad des zweiten Getriebemoduls eine automatische Kupplung und für die Verbindung zwischen dem Ausgangstreiber und dem Planetenträger eine steuerbare Kupplung aufweist.

Gemäss einer weiteren Ausführungsform kann das zweite Hohlrad des ersten Getriebemoduls starr mit dem Antreiber verbunden sein. Vorteilhaft kann es dabei sein, wenn das erste und das zweite Hohlrad des ersten Getriebemoduls über eine automatische Kupplung miteinander verbindbar sind.

Besonders vorteilhaft kann es sein, wenn die Sonnenräder, die Planetenräder und das erste Hohlrad des ersten Getriebemoduls und das Hohlrad des zweiten Getriebemoduls die gleichen Zähnezahlen aufweisen. Mit anderen Worten können also jeweils die ersten Sonnenräder des ersten und zweiten Getriebemoduls, jeweils die zweiten Sonnenräder des ersten und zweiten Getriebemoduls, u.s.w. jeweils die gleichen Zähnezahlen aufweisen. Besonders bevorzugt können dabei die entsprechenden Zahnräder gleich ausgebildet sein. Diese Ausgestaltung hat insbesondere Kostenvorteile, da weniger unterschiedliche Bauteile hergestellt und montiert werden müssen.

Alternativ zur Ausführungsform, bei der das zweite Hohlrad des ersten Getriebemoduls starr mit dem Antreiber verbunden ist, kann es vorteilhaft sein, wenn das Planetenrad des ersten Getriebemoduls zweistufig ausgestaltet ist, wobei eine erste Stufe des Planetenrads einerseits mit dem ersten Sonnenrad und andererseits mit dem ersten Hohlrad in Eingriff stehen kann und eine zweite Stufe des Planetenrads einerseits mit dem zweiten Sonnenrad und andererseits mit dem zweiten Hohlrad in Eingriff stehen kann und wenn der Antreiber wahlweise über ein vorzugsweise automatische Kupplung mit dem zweiten Hohlrad oder über eine schaltbare Kupplung mit dem Planetenträger des ersten Getriebemoduls zum Vorgeben dreier Kupplungskonfigurationen verbindbar ist. Dabei kann in zwei Kupplungskonfigurationen entweder nur das zweite Hohlrad oder nur der Planetenträger mit dem Antreiber verbunden sein und in der dritten Kupplungskonfiguration können sowohl das zweite Hohlrad als auch der Planetenträger mit dem Antreiber verbunden sein.

Alternativ kann das Planetenrad des ersten Getriebemoduls jedoch auch dreistufig ausgestaltet sein, wobei eine erste Stufe des Planetenrads mit dem ersten Sonnenrad in Eingriff steht und eine zweite Stufe des Planetenrads einerseits mit dem zweiten Sonnenrad und andererseits mit dem zweiten Hohlrad in Eingriff steht und eine dritte Stufe mit dem ersten Hohlrad in Eingriff stehen kann und wenn der Antreiber wahlweise über eine automatische Kupplung mit dem zweiten Hohlrad oder über eine schaltbare Kupplung mit dem Planetenträger des ersten Getriebemoduls zum Vorgeben dreier Kupplungskonfigurationen verbindbar ist. In zwei Kupplungskonfigurationen kann wahlweise nur das zweite Hohlrad oder nur der Planetenträger mit dem Antreiber verbunden sein und in der dritten Kupplungskonfiguration kann sowohl das zweite Hohlrad als auch der Planetenträger mit dem Antreiber verbunden sein.

Jedem Sonnenrad des ersten und zweiten Getriebemoduls kann eine Klinke zugeordnet sein, mit der das jeweilige Sonnenrad in mindestens einer Drehrichtung blockiert werden kann. Anstelle von Klinkenmechanismen können selbstverständlich grundsätzlich andere Mechanismen zum wahlweisen Festhalten der Sonnenräder verwendet werden wie z.B. Ziehkeile oder Klauenkuppllungen.

Besonders vorteilhaft kann es sein, wenn jedem Sonnenrad des ersten Getriebemoduls eine Klinke zugeordnet ist, mit der das jeweilige Sonnenrad in einer Drehrichtung blockiert werden kann, und wenn jedem Sonnenrad des zweiten Getriebemoduls je zwei Klinken zugeordnet sind, womit das entsprechende Sonnenrad jeweils wahlweise in unterschiedlicher Drehrichtung blockierbar ist, wobei die paarweise jedem Sonnenrad des zweiten Getriebemoduls zugeordneten Klinken in axialer Richtung und auf dem Umfang der Nabenachse in unterschiedlichen Positionen angeordnet sein können oder wobei die Klinken asymmetrisch ausgeformt und an axial unterschiedlichen Positionen jeweils mit zugehörigen Steuerelementen in Wirkverbindung stehen können. Somit lässt sich das zweite Getriebemodul je nach gesperrter Richtung in einem übersetzenden oder untersetzenden Modus betreiben (Untersetzung: Übersetzungsverhältnis < 1, Übersetzung: Übersetzungsverhältnis > 1).

Ein weiterer Aspekt der Erfindung betrifft eine mehrgängige epizyklische Getriebenabe, insbesondere die vorgängig beschriebene Getriebenabe, enthaltend wenigstens zwei in Serie gekoppelte Getriebemodule, die um eine gemeinsame Nabenachse angeordnet sind, die drehfest mit einem Fahrradrahmen verbindbar ist. Die Getriebenabe weist Sonnenräder, Planetenträger und Hohlräder sowie einen Antreiber und einen Abtrieb auf, wobei die schaltbaren Kupplungen zum Blockieren der Sonnenräder und zum Koppeln der Hohlräder und der Planetenträger mit dem Antreiber oder dem Ausgangstreiber in Wirkverbindung mit einer Steuereinrichtung stehen. Die Steuereinrichtung zum Betätigen der Kupplungen ist dabei in der Nabenachse drehbar und verschiebbar gelagert.

Auf der Steuerwelle kann ein erster einem ersten Getriebemodul zugeordneter Steuerkörper zum Betätigen der entsprechenden Klinken und der schaltbaren Kupplungen zum Antreiber und ein zweiter einem zweiten Getriebemodul zugeordneter Steuerkörper zum Betätigen der entsprechenden Klinken und der schaltbaren Kupplungen zum Ausgangstreiber und zum ersten Getriebemodul, sowie wenigstens ein Kurvenkörper zum axialen Verschieben der Steuerwelle zugeordnet sein.

Vorteilhaft kann es sein, wenn die Steuereinrichtung zwei um die Nabenachse angeordnete Kopplungsringe aufweist, über die von den beiden Steuerkörpern gesteuert axiale Bewegungen auf die axial verschiebbaren, schaltbaren Kupplungen übertragbar sind. Ein weiterer Aspekt der Erfindung betrifft sodann eine Nabe für ein Speichenrad enthaltend eine um eine Achse rotierbare Nabenhülse, die über Speichen mit einer Radfelge verbindbar ist, wobei an der Nabenhülse jeweils seitlich Speichenflansche zur Aufnahme und Fixierung der Speichen vorgesehen sind. Dabei können am Speichenflansch Löcher zum Befestigen der nabenseitigen Enden der Speichen angeordnet sein. Der Speicherflansch kann eine äussere Mantelfläche aufweisen, wobei auf der Mantelfläche gegenüber der radialen Richtung und der tangentialen Richtung geneigte Flankenabschnitte, angeordnet sind. Die Löcher sind dabei auf den Flankenabschnitten vorgesehen, wobei die Löcher vorzugsweise Ansenkungen aufweisen können. Der Speichenflansch kann am Umfang vorzugsweise gleichmässig verteilte Erhebungen zum Bilden einer Wellenform und zum Vorgeben der genannten Flankenabschnitte aufweisen. Selbstverständlich müssen die Mittel zum Befestigen der Speichen nicht an sämtlichen Flankenabschnitten angeordnet sein. Damit soll unter anderem erreicht werden, dass eine allfällige Verbindung der Nabe mit einer Radfelge mittels Speichen auch bei relativ grossem Nabendurchmesser erfolgen kann, ohne dass die zur Aufnahme der Speichen vorgesehenen Speichenflansche in Richtung der Felgenmitte geneigt sein müssen.

An den Flankenabschnitten können Löcher angeordnet sein, in die die nabenseitigen Enden der Speichen einführbar sind. Bei den Löchern handelt es sich vorteilhaft um Durchgangsbohrungen, die jeweils senkrecht zum Flankenabschnitt verlaufen können. Selbstverständlich könnte die Nabe aber auch andere Befestigungsmittel enthalten. Beispielsweise wäre es denkbar, die Enden der Speichen mit dem Speichenflansch zu verschweissen.

Die Speichenflansche können zum Bilden der äusseren Mantelfläche am Umfang verbreitert sein und paarweise benachbarte, zur Nabenachse parallele Flächen aufweisen, die die Flankenabschnitte bilden, wobei die Dicke des verbreiterten Umfangs der Speichenflansche im Bereich der geraden Flächen grösser ist als entlang der restlichen Partien des Umfangs und/oder dass die aneinander stossenden Partien der Flächen der Flankenabschnitte miteinander verrundet und die Bereiche zwischen den Flächenpaaren so konturiert sind, dass eine insgesamt etwa rosettenförmige Form sich ausbildet.

Die Löcher können jeweils nur gruppenweise am Umfang des Speichenflansches verteilt sein, wobei eine Gruppe jeweils aus zwei Löchern besteht, wobei die zwei Löcher einer Gruppe in zueinander gegenüberliegenden Flankenabschnitten angeordnet sind und wobei die zwei Löcher einer Gruppe jeweils zwei benachbarten Erhebungen zugeordnet sind.

Die Nabenhülse und die Speichenflansche können zu einem Teil integriert sein und/oder die Nabenhülse, die Speichenflansche und wenigstens ein Nabendeckel kann einstückig ausgeführt sein. Weiterhin kann der Speichenflansch jeweils als stirnseitig nach aussen offene Wanne ausgebildet sein. Alternativ wäre es aber auch vorstellbar, dass die beiden Speichenflansche nach innen ragen könnten.

Ein weiterer Aspekt der Erfindung betrifft ein Speichenrad mit der vorgängig beschriebenen Nabe, eine Radfelge und die Nabe und die Radfelge miteinander verbindenden Speichen. Jeweils paarweise benachbarte Flankenabschnitte können in einem Winkel zueinander stehen, der etwa dem Winkel zweier benachbarter, sich nicht kreuzender Speichen entspricht. Dabei kann jeder der Flankenabschnitte mit wenigstens einer vorzugsweise senkrechten Bohrung und vorteilhaft mit Ansenkungen zur Aufnahme einer Speiche versehen sein. Durch die Verwendung der speziell ausgebildeten Speichenflansche kann ein stabiles Speichenrad geschaffen werden, welches auch hohen mechanischen Beanspruchungen standhalten kann.

Sodann kann die Verwendung der vorgängig beschriebenen, mehrgängigen epizyklischen Getriebenabe und/oder des vorgängig erwähnten Speichenrads in einem Fahrrad vorteilhaft sein und somit Gegenstand einer Erfindung bilden.

Weitere Vorteile und Einzelmerkmale der Erfindung ergeben sich aus der nachfolgenden Beschreibung von Ausführungsbeispielen und aus den Zeichnungen. Es zeigen:
- Figur 1: eine perspektivische Explosionsdarstellung einer erfindungsgemässen Getriebenabe,
- Figur 2: eine Prinzipskizze der Getriebenabe gemäss Figur 1,
- Figur 3: einen Längsschnitt durch eine erfindungsgemässe Getriebenabe,
- Figur 4: eine perspektivische Darstellung eines Teils einer Steuereinrichtung für die Getriebenabe gemäss Figur 1,
- Figur 5: eine Explosionsdarstellung von Figur 4,
- Figur 6: die Nabenachse aus Figur 1 in leicht vergrösserter Darstellung,
- Figur 7: die Steuereinrichtung für die Getriebenabe gemäss Figur 1,
- Figur 8: ein Blockschaltbild der Kupplungsanordnung für die Getriebenabe,
- Figur 9a: die Nabenachse mit der Steuereinrichtung im ersten Gang,
- Figur 9b: die Nabenachse mit der Steuereinrichtung im elften Gang,
- Figur 9c: die Nabenachse mit der Steuereinrichtung im zwanzigsten Gang,
- Figur 10: eine Prinzipskizze einer Getriebenabe gemäss einem weiteren Ausführungsbeispiel,
- Figur 11: einen Längsschnitt durch eine Getriebenabe gemäss dem Prinzip von Figur 10
- Figur 12: ein Blockschaltbild der Kupplungsanordnung der Getriebenabe gemäss Figur 10,
- Figur 13: eine perspektivische Ansicht eines Speichenrads,
- Figur 14: eine Explosionsdarstellung einer Nabenhülse,
- Figur 15: eine perspektivische Darstellung eines Teils eines Speichenrads in modifizierter Form, und
- Figur 16: eine Draufsicht auf das Speichenrad nach dem Ausführungsbeispiel gemäss Figur 15.

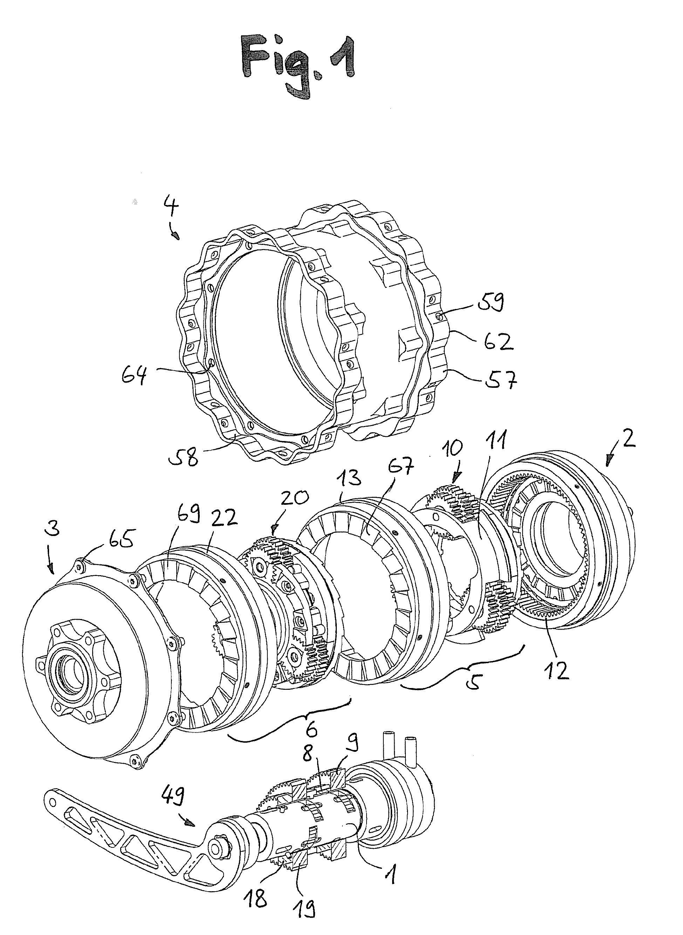

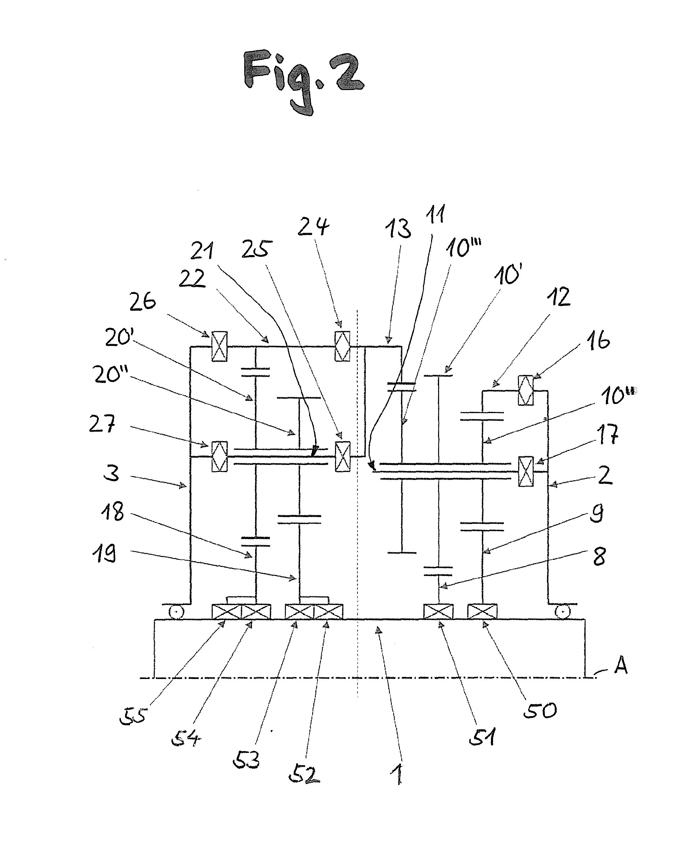

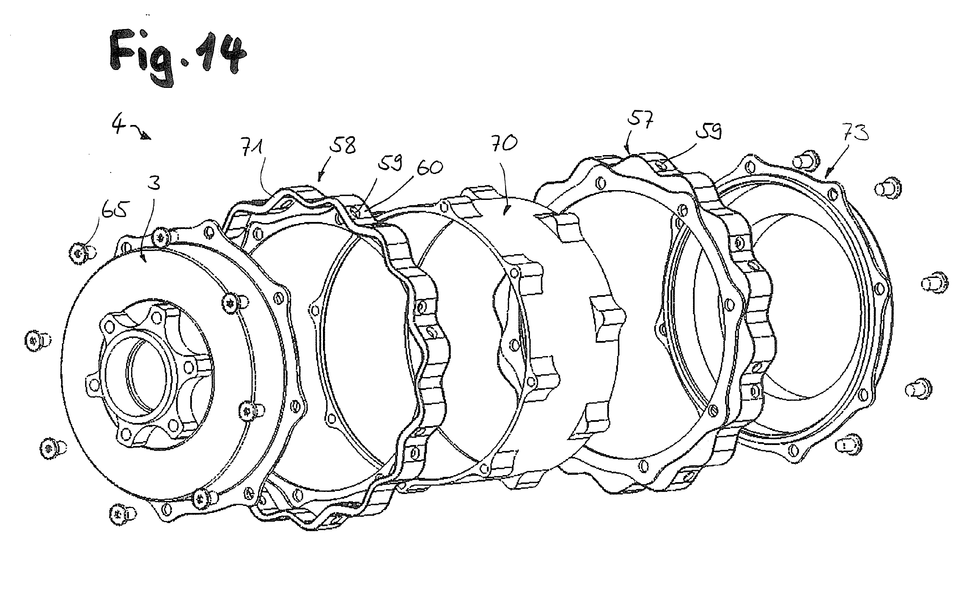

Figur 1 zeigt eine mehrgängige epizyklische Getriebenabe für ein Fahrrad (oder dergleichen) in einer Explosionsdarstellung. Die Getriebenabe für ein Fahrrad oder dergleichen enthält zwei als Planetengetriebe ausgestaltete Getriebemodule 5, 6, wobei ein erstes Getriebemodul über einen Antreiber 2 antreibbar ist und wobei über ein zweites Getriebemodul 6 ein Ausgangstreiber 3 antreibbar ist. Das erste Getriebemodul 5 weist zwei Sonnenräder 8, 9, drei dreistufige, auf einem Planetenträger 11 sitzende Planetenräder 10 und ein erstes und ein zweites Hohlrad 12, 13 auf. Das erste Hohlrad 13 gibt den Abtrieb des ersten Getriebemoduls vor. Das zweite Getriebemodul 6 weist ebenfalls zwei Sonnenräder 18, 19, drei dreistufige, auf einem Planetenträger 21 sitzende Planetenräder 20 und ein Hohlrad 22 auf. Der Ausgangstreiber 3 ist dabei Teil einer mehrteiligen Nabenhülse 4 (vgl. Fig. 14). Die zwei in Serie gekoppelte Getriebemodule 5, 6 sind um eine gemeinsamen Nabenachse 1 angeordnet, die drehfest mit einem Fahrradrahmen (nicht gezeigt) verbindbar ist. Mit einer mehrteiligen Steuereinrichtung 7 in der Nabenanordnung 49 sind verschiedene Kupplungselemente betätigbar. Mit 66, 67, 68, 69 sind stirnseitige Verzahnungen für Kupplungen in Figur 1 erkennbar. Über die Verzahnung 66 kann der Antreiber 2 mit dem Planetenträger 11 verbunden werden. Der Antreiber 2 kann aber alternativ mit dem Hohlrad 12 verbunden werden. Die Kupplungsanordnung und deren Wirkungsweise ist nachfolgend anhand der Figuren 2 und 3 sowie 8 genau beschrieben.

Aus der Prinzipskizze gemäss Figur 2 ist der Aufbau der Getriebenabe, die ein Zwanziggang-Getriebe ergibt, vereinfacht dargestellt. Das erste Hohlrad 13 des ersten Getriebemoduls 5 mittels Kupplungsmitteln 24, 25 ist wahlweise mit dem Hohlrad 22 oder mit dem Planetenträger 21 des zweiten Getriebemoduls 6 verbindbar, weiter ist wahlweise das Hohlrad 22 oder der Planetenträger 21 des zweiten Getriebemoduls 6 mittels Kupplungsmitteln 26, 27 mit dem Ausgangstreiber 3 verbindbar. Für die Verbindung zwischen dem Ausgangstreiber 3 und dem Hohlrad 22 ist eine steuerbare Kupplung 26 und für die Verbindung zwischen dem Ausgangstreiber 3 und dem Planetenträger 21 eine automatische Kupplung 27 vorgesehen. Das Planetenrad 10 des ersten Getriebemoduls 5 ist dreistufig ausgestaltet, wobei eine erste Stufe 10' mit dem ersten Sonnenrad 8 in Eingriff steht und eine zweite Stufe 10" einerseits mit dem zweiten Sonnenrad 9 und andererseits mit dem zweiten Hohlrad 12 in Eingriff steht und eine dritte Stufe 10''' mit dem ersten Hohlrad 13 in Eingriff steht. Der Antreiber 2 ist wahlweise über eine automatische Kupplung 16 mit dem zweiten Hohlrad 12 oder über eine schaltbare Kupplung 17 mit dem Planetenträger 11 des ersten Getriebemoduls 5 verbindbar. Selbstverständlich wäre auch eine zweistufige Ausgestaltung des Planetenrads 10 grundsätzlich möglich.

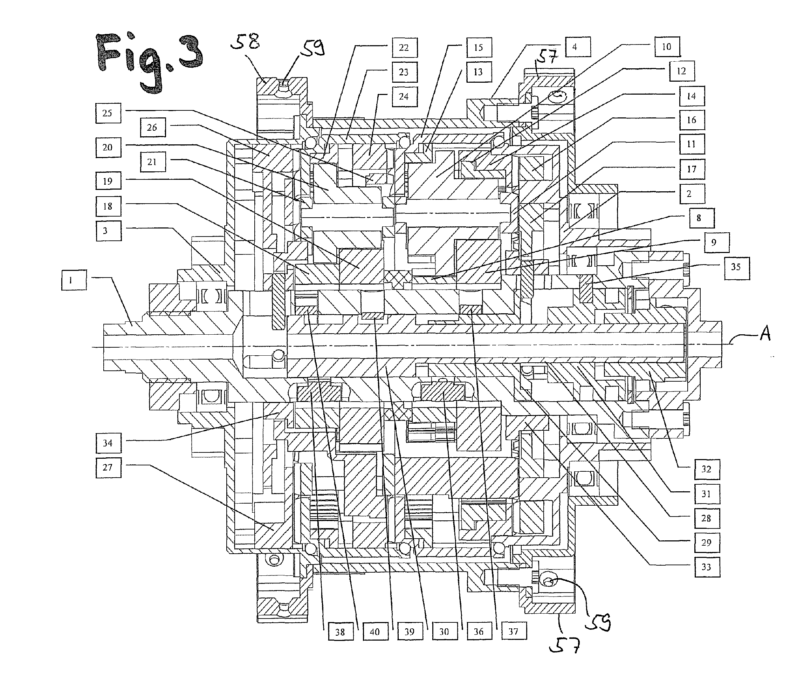

Details zum genauen konstruktiven Aufbau der Getriebenabe können aus Figur 3 entnommen werden. Die Getriebenabe setzt sich wie schon erwähnt zusammen aus der Nabenachse 1, dem Antreiber 2, dem Ausgangstreiber 3, dem ersten koaxial zur Achse angeordneten Planetengetriebe 5, dem zweiten koaxialen Planetengetriebe 6. Das erste Planetengetriebe besteht aus einem ersten Sonnenrad 8 und einem zweiten Sonnenrad 9, einem ersten, dreistufigen Planetenrad 10, einem ersten Planetenträger 11, einem ersten Hohlrad 13 und einem zweiten Hohlrad 12. Der erste Planetenträger 11 ist einseitig mit (hier nicht gezeigten) stirnseitigen Nocken ausgestattet, die eine in beiden Drehrichtungen wirksame Koppelung an eine entsprechende Kupplung erlauben. Erstes und zweites Hohlrad 13, 12 sind drehfest mit einem ersten 14 und zweiten Hohlradträger 15 verbunden (Figur 3), die beide einseitig mit stirnseitigen Verzahnungen ausgeführt sind, um eine in einer Drehrichtung wirksame Koppelung an entsprechende axial verschiebbare Kupplungsteile zu erreichen. Eingangsseitig sind das zweite Hohlrad 12 über eine automatische Kupplung 16 und der erste Planetenträger 11 über eine schaltbare Kupplung 17 mit dem Antreiber 2 verbunden.

Eine erste Getriebeübersetzung wird erreicht, indem bei in einer Drehrichtung mittels (angesteuert durch eine ersten Klinke 36, Figur 3) der Kupplung 51 festgehaltenem ersten Sonnenrad 8 die Drehbewegung des Antreibers 2 über eine automatische, einseitig wirkende axiale Kupplung 16 auf das zweite Hohlrad 12 übertragen wird, während das erste Hohlrad 13 als Abtrieb wirkt. Eine zweite Übersetzung erhält man, indem anstelle des ersten das zweite Sonnenrad 9 mittels der Kupplung 50 (angesteuert durch eine zweite Klinke 37) einseitig drehfest mit der Nabenachse 1 verbunden wird. Eine dritte Übersetzung resultiert, wenn bei mit der ersten Klinke festgehaltenem ersten Sonnenrad 8 die Drehbewegung des Antreibers 2 über eine schaltbare, in beiden Drehrichtungen wirkende axiale Kupplung 17 auf den ersten Planetenträger 11 übertragen wird, wobei die automatische Kupplung 16 zwischen Antreiber 2 und erstem Hohlrad 12 überlaufen wird. Ein Direktgang wird möglich, wenn bei eingeschalteter Kupplung 17 zwischen Antreiber 2 und Planetenträger 11 keine der beiden Klinken der Kupplungen 50, 51 die freie Drehung der beiden Sonnenräder 8, 9 blockieren. Somit werden mit dem ersten Planetengetriebe insgesamt vier Übersetzungen einschliesslich eines Direktganges erzeugt (vgl. Tabelle 1 unten mit den entsprechenden Zähnezahlen der einzelnen Komponenten).

Das zweite Planetengetriebe besteht aus zwei Sonnenrädern 18, 19, zweistufigen Planetenrädern 20, einem Planetenträger 21 und einem Hohlrad 22. Nachfolgend werden diese Komponenten als drittes Sonnenrad 18 und viertes Sonnenrad 19, zweites Planetenrad 20, zweiter Planetenträger 21 (mit einseitig angebrachter stirnseitiger Verzahnung) und drittes Hohlrad 22 bezeichnet. Am Hohlrad ist entsprechend ein mit diesem drehfest verbundener dritter Hohlradträger 23 angeordnet, der einseitig mit einer stirnseitigen Verzahnung ausgestattet ist. Drehfest und axial verschiebbar mit dem zweiten Hohlradträger 15 und somit mit dem Hohlrad ist eine automatische Kupplung 24 verbunden, die mit der stirnseitigen Verzahnung des ersten Hohlradträgers 15 im Eingriff steht oder von diesem gegebenenfalls überlaufen wird. Drehfest, aber axial verschiebbar mit dem zweiten Planetenträger 20 verbunden ist eine extern schaltbare Kupplung 25 mit einseitig angebrachter stirnseitiger Verzahnung, die in eingeschaltetem Zustand gleichfalls mit der stirnseitigen Verzahnung des ersten Hohlradträgers im Eingriff ist und gegebenenfalls von diesem überlaufen werden kann. Diese Kupplung ist so gestaltet, dass sie den Planetenträger durchdringt und von ausserhalb des Planetengetriebes betätigt werden kann. Ausgangsseitig sind das dritte Hohlrad 22 über eine schaltbare Kupplung 26 und der zweite Planetenträger 21 über eine automatische Kupplung 27 mit dem Ausgangstreiber 3 verbunden.

Eine erste Übersetzung des zweiten Planetengetriebes ergibt sich, wenn bei (mit einer dritten Klinke 38, Figur 3) in einer Drehrichtung festgehaltenem dritten Sonnenrad 18 die Drehbewegung des ersten Hohlrades 13 über die schaltbare, drehfest mit dem zweiten Planetenträger 20 verbundene Kupplung 25 auf denselben übertragen wird, während der Abtrieb über das dritte Hohlrad 22 und die drehfest, aber axial verschiebbar im Ausgangstreiber 3 angeordnete Kupplung 26 erfolgt. Eine zweite Übersetzung ergibt sich, wenn bei gleicher Koppelung von Eingang und Ausgang eine vierte Klinke 39, die der Kupplung 52 zugeordnet ist, das vierte Sonnenrad 19 in einer Drehrichtung festhält. Eine dritte und vierte Untersetzung resultieren, wenn der Antrieb des zweiten Planetengetriebes 6 bei ausgeschalteten Kupplungen 25, 26 zwischen zweitem Planetenträger 21 und zweitem Hohlrad 13 und zwischen drittem Hohlrad 22 und Ausgangstreiber 3 über die automatische Kupplung 24 zwischen drittem Hohlrad 22 und zweitem Hohlrad 13 erfolgt und wenn vom zweiten Planetenträger 21 über die automatische Kupplung 27 auf den Ausgangstreiber 3 erfolgt, wobei gleichzeitig über die fünfte 40 der Kupplung 55 oder sechste Klinke 41 der Kupplung 53 die Drehbewegung des dritten oder vierten Sonnenrades 18 oder 19 in umgekehrter Richtung verhindert wird. Ein Direktgang stellt sich ein, wenn die Kupplung 25 zwischen zweitem Hohlrad 13 und zweitem Planetenträger 21 ausgeschaltet und die Kupplung 26 zwischen drittem Hohlrad 22 und Ausgangstreiber 3 eingeschaltet ist. Damit ergeben sich am zweiten Planetengetriebe insgesamt fünf Übersetzungen einschliesslich eines Direktganges (Tab. 1) und aus dem Zusammenspiel zwischen erstem und zweitem Planetengetriebe resultieren folglich total 20 Gänge (Tab. 1).

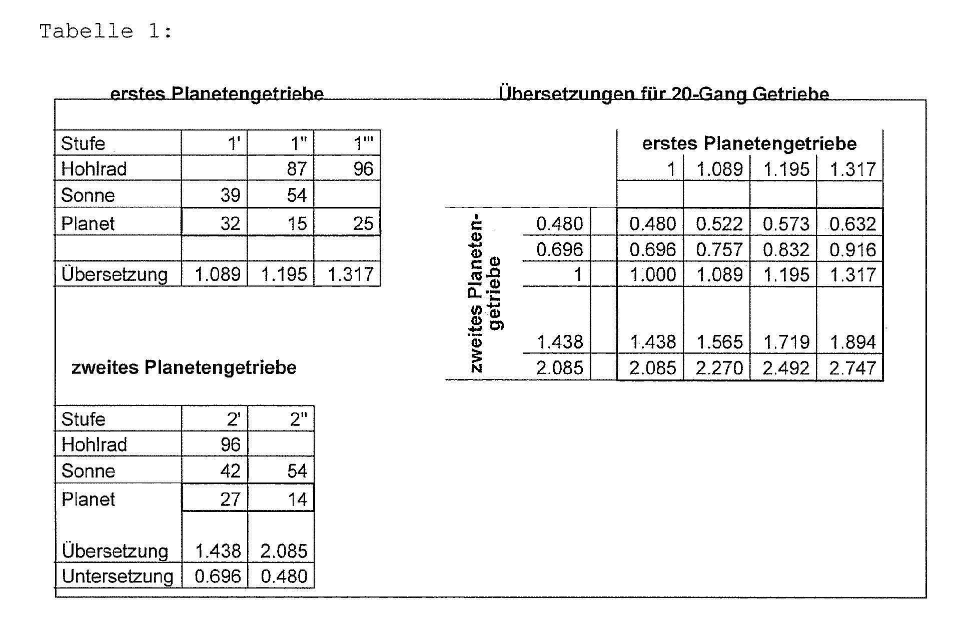

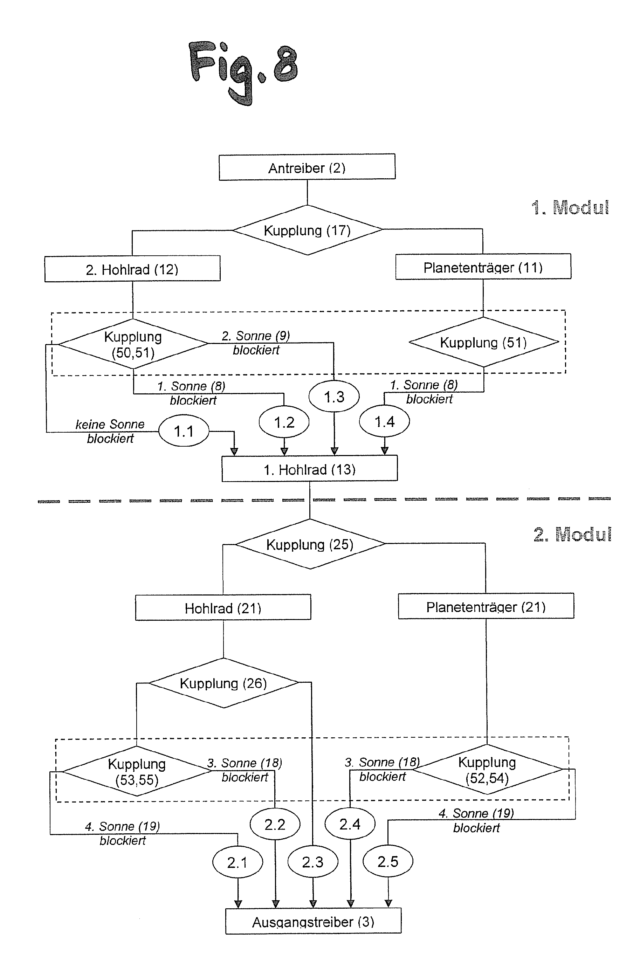

Die 20 Gänge bzw. die jeweiligen Kupplungspositionen sind aus Figur 8 nochmals entnehmbar und ebenfalls in untenstehender Tabelle 2 übersichtlich wiedergegeben.

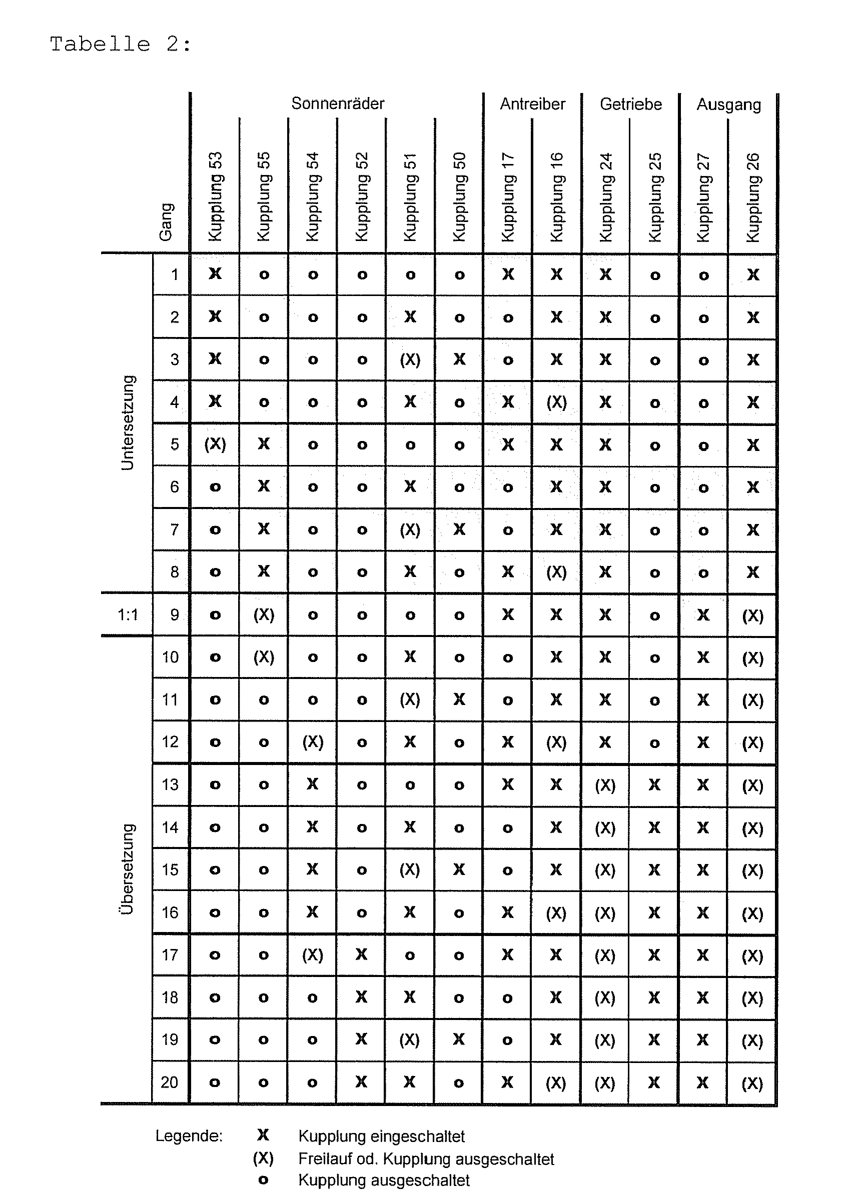

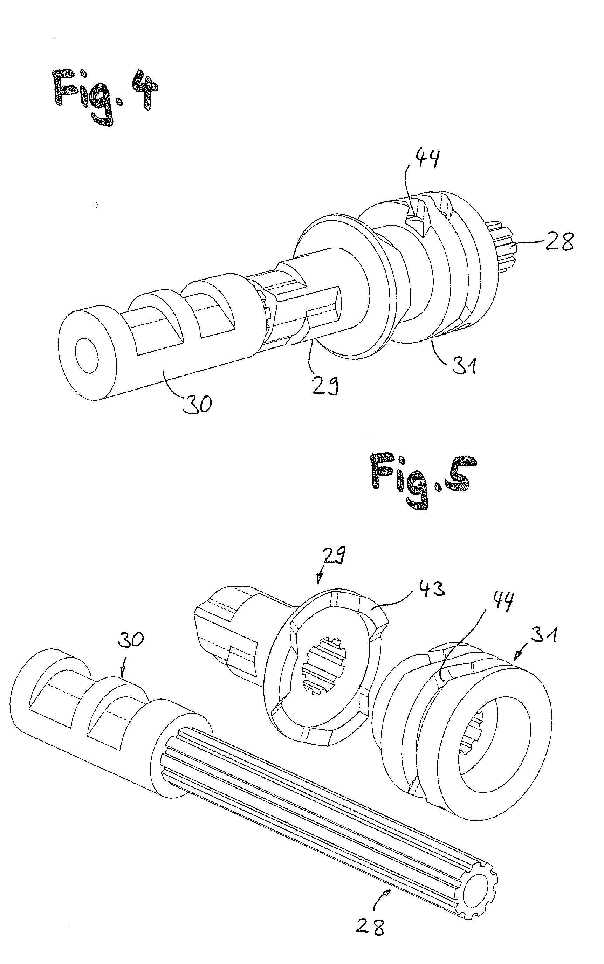

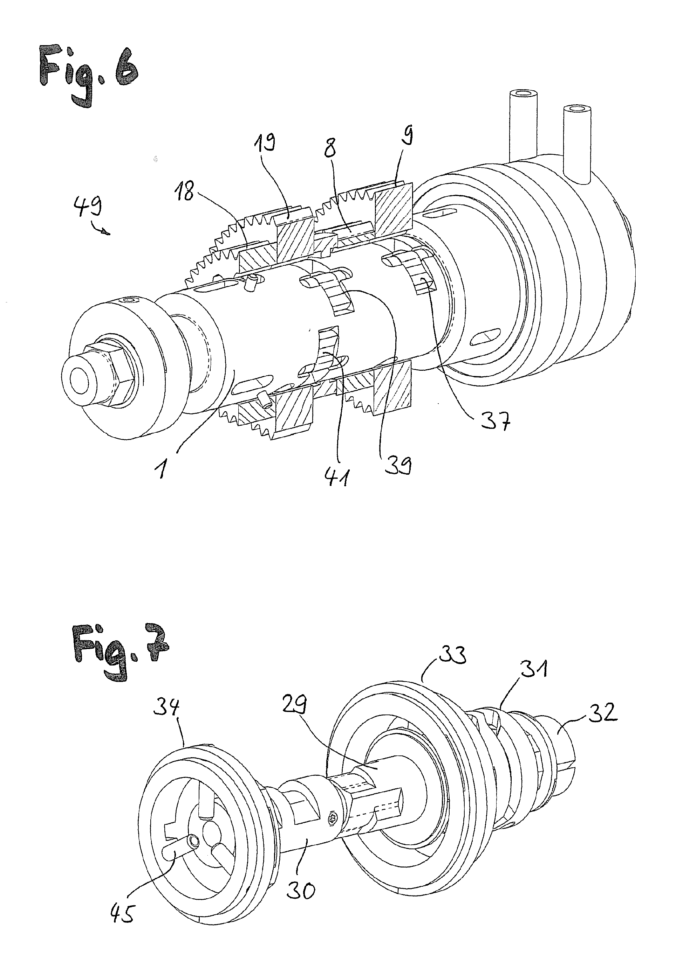

Zur Schaltung der verschiedenen Gangstufen bzw. zur Betätigung der verschiedenen Klinken und axialen Kupplungen dient eine Steuereinrichtung, die in Figur 2 sowie weiterhin in Einzeldarstellungen ganz oder teilweise in den Figuren 4 bis 7 gezeigt ist. Die Steuereinrichtung 7 besteht aus einer Steuerwelle 28, einem ersten Steuerkörper 29, einem zweiten Steuerkörper 30, einem Kurvenkörper 31, einem Steuertreiber 32 und einem ersten Kopplungsring 33 und zweiten Kopplungsring 34. Während Steuerwelle 28, zweiter Steuerkörper 30 und Kurvenkörper 31 koaxial starr miteinander verbunden sind, sind erster Steuerkörper 29 und Steuertreiber 32 drehfest, aber axial verschiebbar auf der Steuerwelle 28 angeordnet. Die Steuerwelle 28 ist mit allen darauf angeordneten Teilen drehbar und axial verschiebbar im Innern der Nabenachse 1 angeordnet. Die Steuereinrichtung 7 hat zur Aufgabe, die sechs im Bereich der Sonnenräder im Achskörper gelagerten Klinken der Kupplungen 50 bis 55 und die drei axialen schaltbaren Kupplungen 17, 25 und 26 ein- bzw. auszuschalten. Die beiden Kopplungsringe 33, 34 sind koaxial ausserhalb der Nabenachse 1 angeordnet und dienen dazu, die axialen Kupplungen 17, 25, 26 mit im Achsinnern liegenden Teilen der Steuereinrichtung 7 zu verbinden. Alle Kupplungen sind so gestaltet, dass der eingeschaltete Zustand über Federn erwirkt wird, so dass von der Steuereinrichtung lediglich zum Ausschalten Kräfte auf die Kupplungen und Klinken aufgebracht werden müssen.

Über den Steuertreiber 32 wird die Steuerwelle 28 mit allen darauf angeordneten Teilen verdreht. Flächen am Umfang des ersten Steuerkörpers 29 betätigen abhängig von der Winkelposition der Steuerwelle 28 die erste und zweite Klinke 37, 38 des ersten Planetengetriebes 5, während über eine stirnseitige Steuerkurve 43 des ersten Steuerkörpers 29 und im ersten Kopplungsring 33 angebrachte Stifte 42, die durch entsprechende Schlitze in der Achse ins Achsinnere ragen, eine axiale Verschiebung des ersten Kopplungsrings 33 und damit der axialen Kupplung im Antreiber 2 bewerkstelligt wird. Der Kurvenkörper 31 weist an seinem Umfang eine Nut 44 auf, in die ein mit der Achse verbundener Stift 35 eingreift, wodurch dem Kurvenkörper 31 und damit der Steuerwelle 28 und dem zweiten Steuerköper 30 abhängig von der Winkelposition zusätzlich eine von drei verschiedenen axialen Positionen zugeordnet wird. Über das Profil des zweiten Steuerkörpers 30 werden die dritte bis sechste Klinke 38 bis 40 betätigt, wobei infolge der Drehwinkel abhängigen unterschiedlichen axialen Positionen des Steuerkörpers 30 im Zusammenspiel mit den axial versetzten Positionen der dritten und fünften Klinke 38 und 40 einerseits und der vierten und sechsten Klinke 39 und 41 andererseits dafür gesorgt ist, dass bei der Drehung der Steuerwelle 28 um mehr als eine Umdrehung sich die Schaltpositionen der Klinken nicht automatisch wiederholen. Mit der Stirnseite des zweiten Steuerkörpers 30 wird zudem die axiale Verschiebung der Steuerwelle 28 mittels im zweiten Kopplungsring 34 angebrachten Stiften auf den Kopplungsring und weiter auf die beiden axial verschiebbaren schaltbaren Kupplungen 25 bzw. 26 zwischen ersten Hohlrad 13 und zweitem Planetenträger 21 bzw. zwischen drittem Hohlrad 22 und Ausgangstreiber 3 übertragen. Insgesamt werden auf diese Weise allein über die Verdrehung der Steuerwelle 28 in der richtigen Reihenfolge zwanzig unterschiedliche Schaltzustände für die verschiedenen Kupplungen erreicht (vgl. Tab. 2 oben).

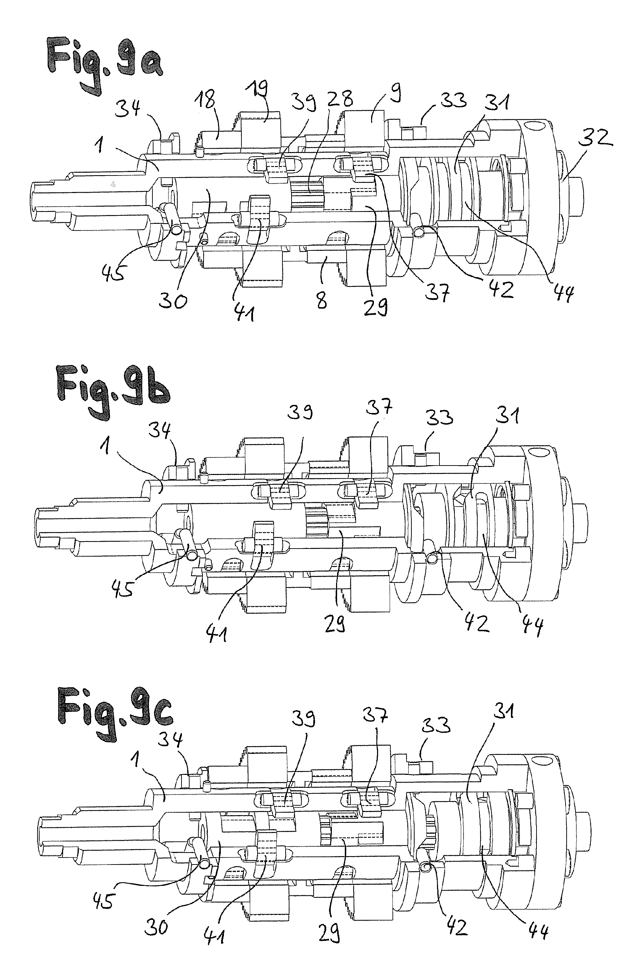

Die unterschiedlichen Schaltungssequenzen sind beispielhaft in den Figuren 9a bis 9c gezeigt. Die Figuren 9a/b/c/entsprechen dabei jeweils der ersten,elften und zwanzigsten Gangstufe.Insbesondere ist aus den Figuren 9 die Abhängigkeit der axial bewegbaren Komponenten auf der Steuerwelle in Abhängigkeit gut erkennbar. Im ersten Gang befindet sich die Steuerwelle 28 und damit die an diese befestigten Kurvenkörper 31 und der zweite Steuerköper 30 in einer ersten axialen Position. Beim weiteren Drehen der Steuerwelle 28 werden diese Komponenten zunächst lediglich gedreht, erst ab bzw. für den neunten Gang wird durch Abfahren eines Stiftes in der Nut 44 des Kurvenkörpers 31 der zweite Kurvenkörper nach vorne verschoben (siehe Fig. 9b). Aus Figur 9b geht weiterhin hervor, dass über den an die Steuerkurve 43 angreifenden Stifts 42 ebenfalls der Kopplungsring 33 nach vorne verschoben wurde. In Figur 9c ist der der zweite Steuerkörper nochmals weiter nach vorne verschoben, während der Kopplungsring 33 wieder zurück verschoben wurde.

Die vorgängig beschriebene Ausführungsform zeichnet sich zudem dadurch aus, dass eine Gesamtübersetzung von über 550% resultiert bei Gangstufen von durchschnittlich rund 10%, und dass die Zähnezahlen für die verschiedenen Zahnräder so gewählt sind, dass zweites und drittes Hohlrad einerseits und zweites und viertes Sonnenrad andererseits gleiche Zähnezahlen aufweisen und zusammen mit den zugehörigen Hohlradträgern als Gleichteile ausgeführt werden können.

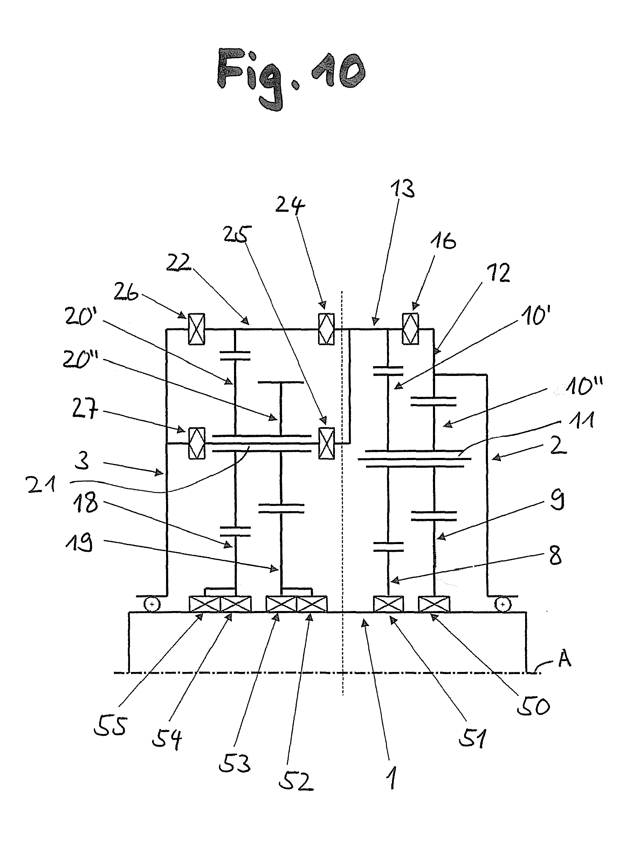

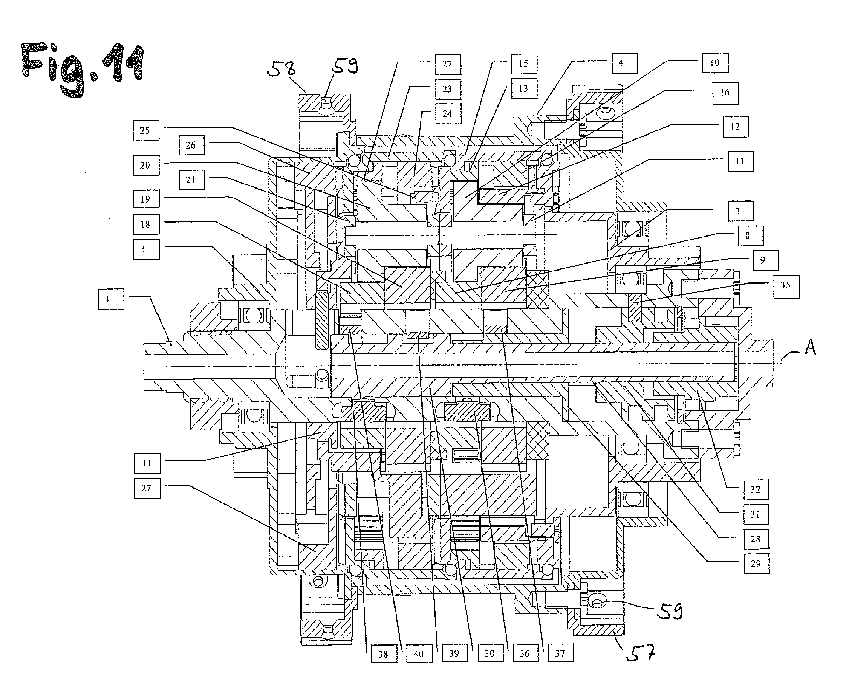

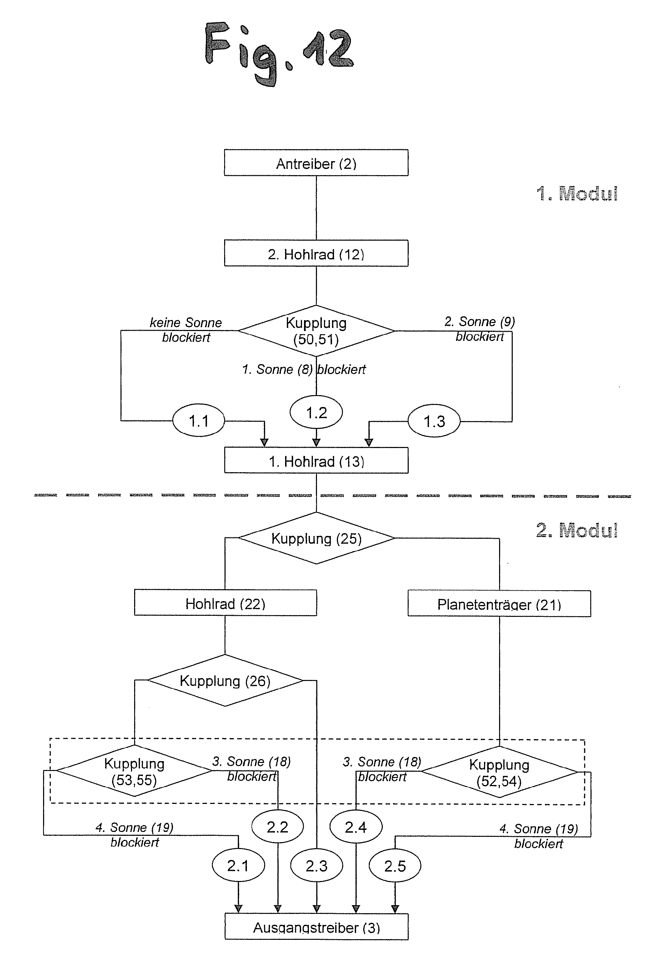

Die Figuren 10 bis 12 betreffen eine zweite Ausführungsform einer erfindungsgemässen Getriebenabe, die als Fünfzehngang-Getriebe ausgestaltet ist. Die Getriebenabe weist einen grundsätzlich gleichen Aufbau auf, wobei aber das erste Planetengetriebes so ausgestaltet ist, dass die dritte Übersetzung entfällt. Das zweite Hohlrad 12 ist deshalb starr mit dem Antreiber 2 verbunden. Somit weist das erste Planetengetriebe 5 drei Übersetzungen einschliesslich eines Direktganges auf, womit bei gleichem zweitem Planetengetriebe 6 (mit fünf Übersetzungen wie in der ersten Ausführungsform) insgesamt 15 Übersetzungen für die Getriebenabe resultieren. Durch den Verzicht auf die dritte Übersetzung des ersten Planetengetriebes 5 vereinfacht sich das erste Planetengetriebe nicht unwesentlich, da die schaltbare Kupplung zwischen Antreiber und erstem Planetenträger entfällt mitsamt allen zugehörigen Teilen der Steuereinrichtung. Weiter Änderungen liegen darin, dass die automatische Kupplung zwischen erstem Hohlrad und Antreiber durch eine automatische Kupplung 16 zwischen dem ersten und zweiten Hohlrad ersetzt wird. Der erste Planetenträger 11 weist keine Nocken für den Eingriff mit einer Kupplung auf.

Um trotz den veränderten Übersetzungsverhältnissen über den gesamten Übersetzungsbereich gleichmässige Gangstufen zu erreichen, muss das erste Planetengetriebe 5 vorteilhaft rund 25% grössere Gangstufen und somit mindestens teilweise Räder mit anderen Zähnezahlen aufweisen. Im konkreten Fall ist das erste Planetengetriebe 5 mit zweistufige Planeten 10 ausgestattet. Die Zähnezahlen aller Räder des ersten Planetengetriebes 5 mit Ausnahme des zweiten Hohlrades 12, das allein im ersten Planetengetriebe 5 auftritt, sind identisch mit den Zähnezahlen aller Räder des zweiten, gegenüber der ersten Ausführungsform unveränderten, Planetengetriebes 6. Details zu Zähnezahlen und Übersetzungen für dieses 15-Gang Getriebe mit den beschriebenen Zahnrädern gleicher Zähnezahl für erstes und zweites Planetengetriebe können aus der Tabelle 3 unten entnommen werden.

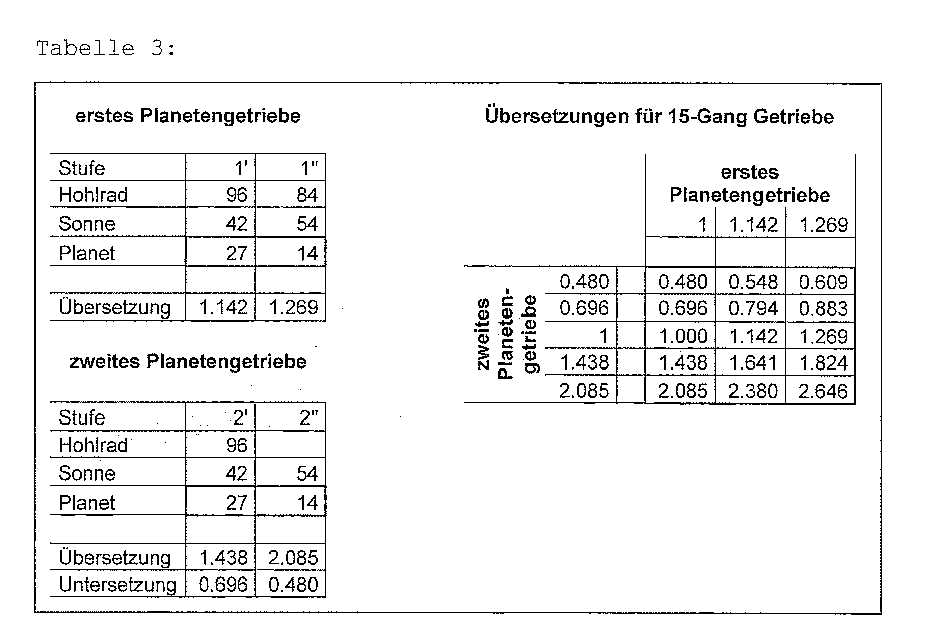

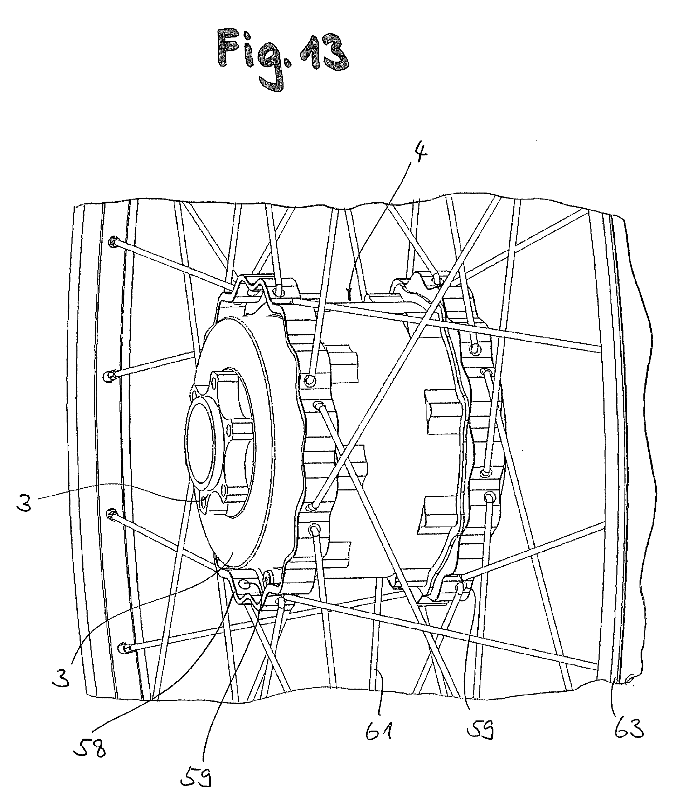

Figur 13 zeigt eine Nabe für ein Speichenrad enthaltend eine um eine Achse rotierbare Nabenhülse 4, die über Speichen 61 mit einer Radfelge 63 verbunden ist. Die Nabenhülse 4 weist jeweils seitlich Speichenflansche 57, 58 zur Aufnahme und Fixierung der Speichen 61 auf, wobei am Speichenflansch (57, 58) Löcher 59 zum Befestigen der nabenseitigen Enden der Speichen 61 angeordnet sind. Der Speichenflansch 57, 58 weist eine äussere Mantelfläche auf, die in einer Draufsicht bezogen auf die Achse wellenförmig profiliert ist und die auf der Mantelfläche gegenüber der radialen Richtung und tangentialen Richtung geneigte Flankenabschnitte 60 aufweist. Die Löcher 59 enthalten, in die nabenseitigen Enden der Speichen 61 eingeführt sind, sind ersichtlicherweise an den Flankenabschnitten 60 angeordnet.

Die Profilierung der äusseren Mantelfläche ist wie Figur 14 deutlich zeigt, etwa rosettenartig ausgebildet. Hieraus ist auch der mehrteilige Aufbau der Nabenhülse 4 erkennbar. Der Speichenflansch 57, 58 ist hohlwandig ausgestaltet und ragt stirnseitig nach aussen.

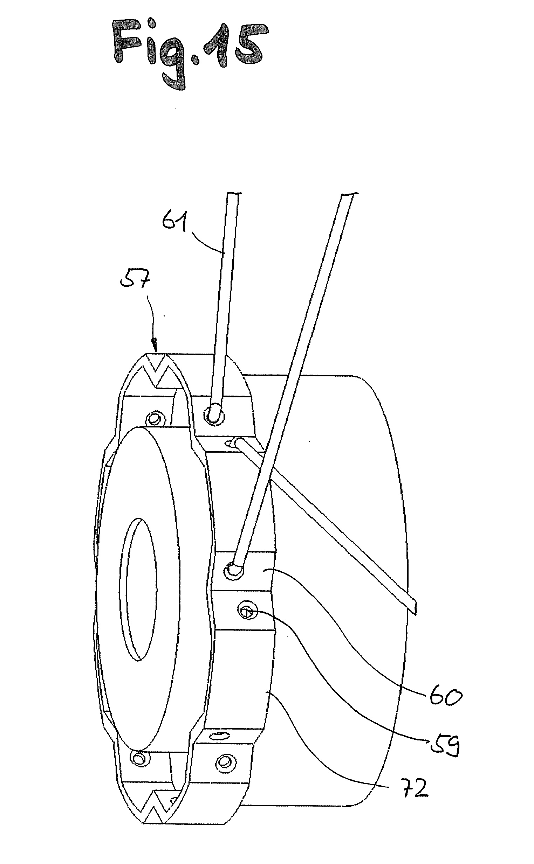

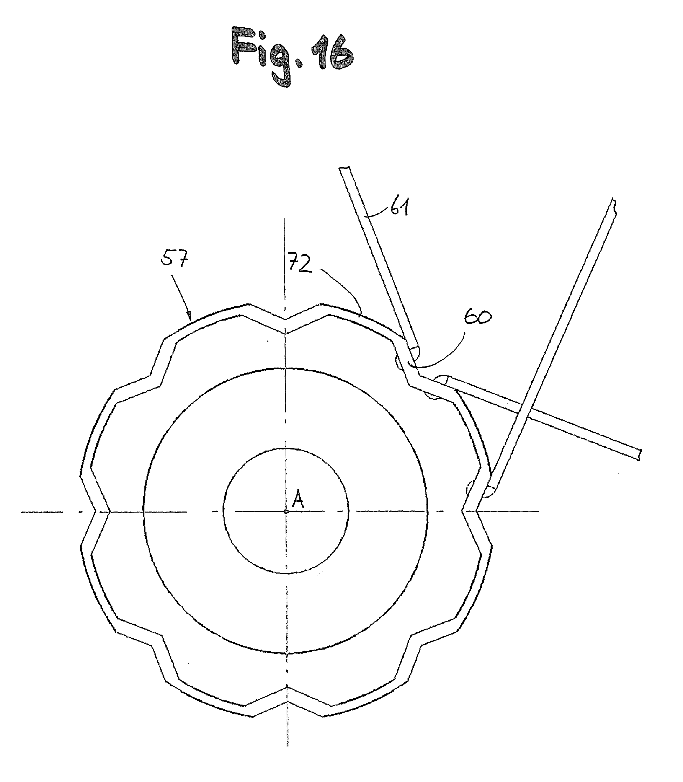

Wie aus einem weiteren Ausführungsbeispiel für eine mögliche Profilform aus den Figuren 15 und 16 hervorgeht, sind die Speichen 61 aussen an der Mantelfläche der Speichenflansche jeweils in Richtung der Flankenabschnitten 60 in einem Verbindungsabschnitt anliegend verlaufend angeordnet. Jeweils paarweise benachbarte Flankenabschnitte 60 stehen in einem Winkel zueinander, der etwa dem Winkel zweier benachbarter, sich nicht kreuzender Speichen 61 entspricht, wobei jeder der Flankenabschnitte 60 mit einer etwa senkrechten Bohrung 59 mit Ansenkungen zur Aufnahme einer Speiche 61 versehen ist.

## Patentansprüche

1. Mehrgängige epizyklische Getriebenabe für ein Fahrrad, enthaltend zwei in Serie gekoppelte Getriebemodule (5, 6),wobei ein erstes Getriebemodul (5) über einen Antreiber (2) antreibbar ist und wobei über ein zweites Getriebemodul (6) ein Ausgangstreiber (3) antreibbar ist, **dadurch gekennzeichnet, dass** das erste Getriebemodul (5) wenigstens ein erstes Sonnenrad (8), vorzugsweise ein erstes und ein zweites Sonnenrad (8, 9), wenigstens ein wenigstens zweistufiges, auf einem Planetenträger (11) sitzendes Planetenrad (10) und ein erstes und ein zweites Hohlrad (12, 13) aufweist, wobei der Antreiber (2) wenigstens mit dem zweiten Hohlrad (12) verbunden oder mittels Kupplungsmitteln (16) verbindbar ist, das zweite Getriebemodul (6) wenigstens ein Sonnenrad (18), vorzugsweise ein erstes und ein zweites Sonnenrad (18, 19), wenigstens ein auf einem Planetenträger (21) sitzendes Planetenrad (20) und wenigstens ein Hohlrad (22) aufweist, wobei das erste Hohlrad (13) des ersten Getriebemoduls (5) mittels Kupplungsmitteln (24, 25) wahlweise mit dem Hohlrad (22) oder mit dem Planetenträger (21) des zweiten Getriebemoduls (6) verbindbar ist und wobei wahlweise das Hohlrad (22) oder der Planetenträger (21) des zweiten Getriebemoduls (6) mittels Kupplungsmitteln (26, 27) mit dem Ausgangstreiber (3) verbindbar ist.

2. Getriebenabe nach Anspruch 1, **dadurch gekennzeichnet, dass** sie für die Verbindung zwischen dem ersten Hohlrad (13) des ersten Getriebemoduls (5) und dem Hohlrad (22) des zweiten Getriebemoduls (6) eine automatische Kupplung (24) aufweist und/oder dass sie für die Verbindung zwischen dem ersten Hohlrad (13) des ersten Getriebemoduls (5) und dem Planetenträger (21) des zweiten Getriebemoduls (6) eine steuerbare Kupplung (25) aufweist.

3. Getriebenabe nach Anspruch 1 oder 2, **dadurch gekennzeichnet, dass** sie für die Verbindung zwischen dem Ausgangstreiber (3) und dem Hohlrad (22) des zweiten Getriebemoduls (6) eine steuerbare Kupplung (26) und für die Verbindung zwischen dem Ausgangstreiber (3) und dem Planetenträger (21) eine automatische Kupplung (27) aufweist.

4. Getriebenabe nach einem der Ansprüche 1 bis 3, **dadurch gekennzeichnet, dass** das zweite Hohlrad (12) des ersten Getriebemoduls (5) starr mit dem Antreiber (2) verbunden ist.

5. Getriebenabe nach Anspruch 4, **dadurch gekennzeichnet, dass** das erste und das zweites Hohlrad (12, 13) des ersten Getriebemoduls (5) über eine automatische Kupplung (16) miteinander verbindbar sind.

6. Getriebenabe nach einem der Ansprüche 4 bis 5, **dadurch gekennzeichnet, dass** die beiden Getriebemodule (5, 6) als Zahnradgetriebe ausgestaltet sind und dass die Sonnenräder (8, 9, 18, 19), die Planetenräder (10, 20) und das erste Hohlrad (12) des ersten Getriebemoduls (5) und das Hohlrad des zweiten Getriebemoduls (22) die gleichen Zähnezahlen aufweisen.

7. Getriebenabe nach einem der Ansprüche 1 bis 3, **dadurch gekennzeichnet, dass** das Planetenrad (10) des ersten Getriebemoduls (5) zweistufig ausgestaltet ist, wobei eine erste Stufe (10') des Planetenrads (10) einerseits mit dem ersten Sonnenrad (8) und andererseits mit dem ersten Hohlrad (13) in Eingriff steht und eine zweite Stufe (10'') des Planetenrads (10) einerseits mit dem zweiten Sonnenrad (9) und andererseits mit dem zweiten Hohlrad (12) in Eingriff steht, und dass der Antreiber (2) wahlweise über eine vorzugsweise automatische Kupplung (16) mit dem zweiten Hohlrad (12) oder über eine schaltbare Kupplung (17) mit dem Planetenträger (11) des ersten Getriebemoduls (5) verbindbar ist.

8. Getriebenabe nach einem der Ansprüche 1 bis 3, **dadurch gekennzeichnet, dass** das Planetenrad (10) des ersten Getriebemoduls (5) dreistufig ausgestaltet ist, wobei eine erste Stufe (10') des Planetenrads (10) mit dem ersten Sonnenrad (8) in Eingriff steht und eine zweite Stufe (10'') des Planetenrads (10) einerseits mit dem zweiten Sonnenrad (9) und andererseits mit dem zweiten Hohlrad (12) in Eingriff steht und eine dritte Stufe (10''') mit dem ersten Hohlrad (13) in Eingriff steht, und dass der Antreiber (2) wahlweise über eine vorzugsweise automatische Kupplung (16) mit dem ersten Hohlrad (12) oder über eine schaltbare Kupplung (17) mit dem Planetenträger (11) des ersten Getriebemoduls (5) verbindbar ist.

9. Getriebenabe nach einem der Ansprüche 1 bis 8, **dadurch gekennzeichnet, dass** sie zum Blockieren der Sonnenräder (8,9,18,19) in einer Drehrichtung über schaltbare Klinken (36, 37, 38, 39, 40, 41) verfügt, wobei jedem Sonnenrad wenigstens eine Klinke zugeordnet ist.

10. Getriebenabe nach Anspruch 9, **dadurch gekennzeichnet, dass** jedem Sonnenrad (8,9) des ersten Getriebemoduls (5) eine Klinke (36,37) zugeordnet ist, mit der das jeweilige Sonnenrad in einer Drehrichtung blockiert werden kann, und dass jedem Sonnenrad (18,19) des zweiten Getriebemoduls je zwei Klinken (38,40; 39,41) zugeordnet sind, womit das entsprechende Sonnenrad jeweils wahlweise in unterschiedlicher Drehrichtung blockierbar ist, wobei die paarweise jedem Sonnenrad (18,19) des zweiten Getriebemoduls zugeordneten Klinken (38,40; 39,41) jeweils in axialer Richtung und in Umfangsrichtung in unterschiedlichen Positionen auf der Nabenachse (1) angeordnet sind.

11. Mehrgängige epizyklische Getriebenabe, insbesondere Getriebenabe gemäss einem der Ansprüche 1 bis 10, enthaltend wenigstens zwei in Serie gekoppelte Getriebemodule (5, 6), die um eine gemeinsamen Nabenachse (1) angeordnet sind, die drehfest mit einem Fahrradrahmen verbindbar ist, wobei sie Sonnenräder (8, 9, 18, 19), Planetenträger (11,21) und Hohlräder (12, 13, 22) sowie einen Antreiber (2) und einen Abtrieb (3) aufweist, wobei die schaltbaren Kupplungen zum Blockieren der Sonnenräder und zum Koppeln der Hohlräder und der Planetenträger mit dem Antreiber oder dem Ausgangstreiber in Wirkverbindung mit einer Steuereinrichtung (7) stehen, **dadurch gekennzeichnet, dass** die Steuereinrichtung (7) zum Betätigen der Kupplungen in der Nabenachse drehbar und verschiebbar gelagert ist.

12. Getriebenabe nach Anspruch 11, **dadurch gekennzeichnet, dass** auf der Steuerwelle (28) ein erster einem ersten Getriebemodul (5) zugeordneter Steuerkörper (29) zum Betätigen der entsprechenden Klinken (36, 37) und der schaltbaren Kupplungen (17) zum Antreiber (2) und ein zweiter einem zweiten Getriebemodul (6) zugeordneter Steuerkörper (30) zum Betätigen der entsprechenden Klinken (38, 39, 40, 41) der schaltbaren Kupplungen (25,26) zum Ausgangstreiber (3) und zum ersten Getriebemodul (5), sowie wenigstens ein Kurvenkörper (31) zum axialen Verschieben der Steuerwelle (28) zugeordnet ist.

13. Getriebenabe nach Anspruch 11 oder 12, **dadurch gekennzeichnet, dass** die Steuereinrichtung zwei um die Nabenachse (1) angeordnete Kopplungsringe (33, 34) aufweist, über die von den beiden Steuerkörpern (29,30) gesteuert axiale Bewegungen auf die axial verschiebbaren, schaltbaren Kupplungen (17,25,26) übertragbar sind.

14. Nabe für ein Speichenrad, insbesondere Getriebenabe gemäss einem der Ansprüche 1 bis 13, enthaltend eine Nabenhülse (4), die über Speichen (61) mit einer Radfelge (63) verbindbar ist, wobei die Nabenhülse (4) jeweils seitlich Speichenflansche (57, 58) zur Aufnahme und Fixierung der Speichen (61) aufweist, wobei am Speichenflansch (57, 58) Löcher (59) zum Befestigen der nabenseitigen Enden der Speichen (61) angeordnet sind, **dadurch gekennzeichnet, dass** der Speichenflansch (57, 58) eine äussere Mantelfläche aufweist, wobei auf der Mantelfläche gegenüber der radialen Richtung und tangentialen Richtung geneigteFlankenabschnitte (60) angeordnet sind, und dass an den Flankenabschnitten (60) die Löcher (59) vorgesehen sind, wobei die Löcher vorzugsweise Ansenkungen aufweisen.

15. Nabe nach Anspruch 14, **dadurch gekennzeichnet, dass** die Speichenflansche (57,58) zum Bilden der äusseren Mantelfläche am Umfang verbreitert sind und paarweise benachbarte, zur Nabenachse parallele Flächen aufweisen, die die Flankenabschnitte (60) bilden, wobei die Dicke des verbreiterten Umfangs der Speichenflansche im Bereich der geraden Flächen grösser ist als entlang der restlichen Partien des Umfangs und/oder dass die aneinander stossenden Partien der Flächen der Flankenabschnitte (60) miteinander verrundet und die Bereiche zwischen den Flächenpaaren so konturiert sind, dass eine insgesamt etwa rosettenförmige Form sich ausbildet.

16. Nabe nach Anspruch 14 oder 15, **dadurch gekennzeichnet, dass** Nabenhülse (4) und Speichenflansche (57, 58) zu einem Teil integriert sind und/oder dass Nabenhülse (4), Speichenflansche (57, 58) und wenigstens ein Nabendeckel (73) einstückig ausgeführt sind.

17. Speichenrad mit einer Nabe gemäss einem der Ansprüche 14 bis 16, einer Radfelge (63) und die Nabe und die Radfelge miteinander verbindenden Speichen (61), **dadurch gekennzeichnet, dass** jeweils paarweise benachbarte Flankenabschnitte (60) in einem Winkel zueinander stehen, der etwa dem Winkel zweier benachbarter, sich nicht kreuzender Speichen (61) entspricht, und wobei jeder der Flankenabschnitte (60) mit wenigstens einer vorzugsweise senkrechten Bohrung (59) und vorteilhaft mit Ansenkungen zur Aufnahme einer Speiche (61) versehen ist.

18. Fahrrad mit einer Getriebenabe gemäss einem der Ansprüche 1 bis 13 und/oder einem Speichenrad gemäss Anspruch 17.
